# EUROPEAN PATENT SPECIFICATION

(11) **EP 4 339 902 B1**
(45) Date of publication and mention of the grant of the patent: **09.12.2026**
(21) Application number: 23159033.2
(22) Date of filing: 28.02.2023
(51) Int. Cl.: G06V 10/80, G06V 20/58, G06V 20/56, G06V 10/70, G06V 10/86

(54) **TARGET DETECTION METHOD AND APPARATUS IN RUNNING OF VEHICLES, DEVICE, AND MEDIUM**
ZIELERKENNUNGSVERFAHREN UND -VORRICHTUNG BEIM FAHREN VON FAHRZEUGEN, VORRICHTUNG UND MEDIUM
PROCÉDÉ ET APPAREIL DE DÉTECTION DE CIBLE LORS DE L'EXÉCUTION DE VÉHICULES, DISPOSITIF ET SUPPORT

(30) Priority: 16.09.2022 CN 202211129923
(43) Date of publication of application: 20.03.2024
(73) Proprietor: Chongqing Changan Automobile Co., Ltd., Chongqing 400023 (CN)
(72) Inventor: TANG, Zhaoxiang, Chongqing, 400023 (CN); LONG, Meiyuan, Chongqing, 400023 (CN); WANG, Feng, Chongqing, 400023 (CN)
(74) Representative: Schulz Junghans Patentanwälte PartGmbB

(56) References cited:
- EP-B1- 3 312 769
- US-A1- 2016 176 341
- GRAUMAN KRISTEN ET AL: "Visual Object Recognition", 2 February 2011 (2011-02-02), Cham, XP093070705, ISSN: 1939-4608, ISBN: 978-3-031-01553-3, Retrieved from the Internet <URL:https://link.springer.com/content/pdf/10.1007/978-3-031-01553-3.pdf>
- RABINOVICH ANDREW ET AL: "Objects in Context", 2007 IEEE 11TH INTERNATIONAL CONFERENCE ON COMPUTER VISION, 2 October 2007 (2007-10-02), pages 1 - 8, XP093070707, ISSN: 1550-5499, ISBN: 978-1-4244-1630-1, DOI: 10.1109/ICCV.2007.4408986

## Description

### Field of the Invention

The present application relates to the technical field of safety of intended functions of automatic driving, in particular to a target detection method and apparatus in running of vehicles, a device and a medium.

### Background of the Invention

In recent years, with the rise of the deep learning technology, the field of computer vision has made rapid progress. As a typical application, target detection is widely used in face recognition, intelligent driving and other fields. In the field of intelligent driving, target detection mainly focuses on detecting road participants, traffic signs and general obstacles. These kinds of scenarios require a large number of road test data collected by real vehicles. However, during the collection, due to pedestrians, vehicles, non-motor vehicles or other obstacles, there are a large number of sheltered samples in the road test data. During training and prediction of such samples, due to the lack of a large area of information, features are incomplete or disappear, and the performance of a detector will decrease, which easily leads to inaccurate recognition results and missing recall. Therefore, how to improve the accuracy of recognition of a sheltered target has become a technical problem urgently needing to be solved. An example of relevant prior art is EP 3 312 769 B1 (HITACHI LTD [JP]) 25 September 2019.

### Summary of the Invention

The present invention provides a target detection method and apparatus in running of vehicles, a device and a medium, which solve the problem in the prior art of low accuracy of recognition of a sheltered target, easily leading to mis-recognition or missing detection. The invention is defined in the appended claims.

An embodiment of a first aspect of the present application provides a target detection method in running of vehicles, including the following steps: acquiring a picture to be detected of a target vehicle in a running process; inputting the picture to be detected into a pre-trained first detector, so that the first detector outputs a first recognition result of a reference target contained in the picture to be detected; inputting the picture to be detected into a pre-trained second detector, so that the second detector outputs a second recognition result of at least one target to be detected contained in the picture to be detected, each target to be detected and the reference target having a correspondence relationship; comparing the first recognition result with the second recognition result; and correcting the second recognition result according to a comparison result to obtain a target recognition result.

According to the above technical means, the embodiment of the present application acquires a picture to be detected of a target vehicle in a running process; inputs the picture to be detected into a pre-trained first detector, so that the first detector outputs a first recognition result of a reference target contained in the picture to be detected; and inputs the picture to be detected into a pre-trained second detector, so that the second detector outputs a second recognition result of at least one target to be detected contained in the picture to be detected, each target to be detected and the reference target having a correspondence relationship. Thus, the first recognition result and the second recognition result also have a certain correspondence relationship. The first recognition result is compared with the second recognition result for mutual verification, so that the second recognition result is corrected according to a comparison result to obtain the accuracy of a target recognition result. Thus, by means of comparison of the first recognition result corresponding to the reference target with the second recognition result corresponding to the target to be detected, and correction, mis-recognition or missing detection is avoided.

Further, the second recognition result includes a predicted category corresponding to each target to be detected, and a first confidence coefficient; the first recognition result includes a baseline category corresponding to each target to be detected; the correcting the second recognition result according to a comparison result to obtain a target recognition result includes: if the first recognition result is the same as the predicted category corresponding to a current target to be detected, determining that the predicted category corresponding to the current target to be detected is a correct result; if the first recognition result is different from the predicted category corresponding to the current target to be detected, determining that the predicted category corresponding to the current target to be detected is a confused result, and determining, according to first confidence coefficients of the prediction categories that correspond to other targets to be detected adjacent to the current target to be detected and are determined as the correct results, that the predicted category corresponding to the current target to be detected is a second confidence coefficient of the first recognition result; and if the second confidence coefficient reaches a predetermined threshold, correcting the predicted category corresponding to the current target to be detected to be the corresponding baseline category in the first recognition result.

According to the above technical means, the embodiment of the present application can improve the accuracy of a target recognition result of a target to be detected.

Further, the determining, according to first confidence coefficients of the prediction categories that correspond to other targets to be detected adjacent to the current target to be detected and are determined as the correct results, that the predicted category corresponding to the current target to be detected is a second confidence coefficient of the first recognition result includes: averaging the first confidence coefficients of the prediction categories that correspond to other targets to be detected adjacent to the current target to be detected and are determined as the correct results to obtain that the predicted category corresponding to the current target to be detected is the second confidence coefficient of the first recognition result.

According to the above technical means, the embodiment of the present application can ensure the reasonability of correction.

Further, the determining, according to first confidence coefficients of the prediction categories that correspond to other targets to be detected adjacent to the current target to be detected and are determined as the correct results, that the predicted category corresponding to the current target to be detected is a second confidence coefficient of the first recognition result includes: performing weighted average operation according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and determining that the predicted category corresponding to the current target to be detected is the second confidence coefficient of the first recognition result, wherein a weight of the first confidence coefficient of each predicted category determined as the correct result is greater than a weight of the first confidence coefficient of each predicted category determined as the confused result.

According to the above technical means, in the embodiment of the present application, during the correction, the confidence coefficients of the prediction categories that are determined as the correct results and the confused results can be comprehensively considered, thus ensuring the reasonability.

Further, the method further includes: acquiring first sample data containing the reference target and labeled data corresponding to the first sample data from road test data; training a pre-built first detector according to the first sample data and the labeled data corresponding to the first sample data, so as to enable the first detector to correctly output the first recognition result for the reference target; acquiring second sample data containing the target to be detected and labeled data corresponding to the second sample data from the road test data; and training a pre-built second detector according to the second sample data and the labeled data corresponding to the second sample data, so as to enable the second detector to correctly output the second recognition result for the target to be detected.

According to the above technical means, the first detector and the second detector are respectively trained according to the first sample data and the second sample data as well as the labeled data corresponding to the first sample data and the second sample data in the road test data, so that the accuracy of the trained first detector and second detector can be ensured.

Further, the reference target is a lane guide sign, and the target to be detected is a road guide arrow.

According to the above technical means, information of a current lane where a vehicle is located can be accurately recognized, which provides a reliable basis for intelligent driving.

Further, the comparing the first recognition result with the second recognition result includes: if the picture to be detected does not simultaneously contain the reference target and the target to be detected, comparing the first recognition result or second recognition result first acquired with a second recognition result or first recognition result later acquired within a predetermined time interval.

According to the above technical means, when the picture to be detected does not simultaneously contain the reference target and the target to be detected, the accuracy of a target recognition result can also be improved.

An embodiment of a second aspect of the present application provides a target detection apparatus in running of vehicles, including: an acquisition module, configured to acquire a picture to be detected of a target vehicle in a running process; a first detection module, configured to input the picture to be detected into a pre-trained first detector, so that the first detector outputs a first recognition result of a reference target contained in the picture to be detected; a second detection module, configured to input the picture to be detected into a pre-trained second detector, so that the second detector outputs a second recognition result of at least one target to be detected contained in the picture to be detected, each target to be detected and the reference target having a correspondence relationship; a comparison module, configured to compare the first recognition result with the second recognition result; and a processing module, configured to correct the second recognition result according to a comparison result to obtain a target recognition result.

Further, the second recognition result includes a predicted category corresponding to each target to be detected, and a first confidence coefficient; the first recognition result includes a baseline category corresponding to each target to be detected; and the processing module is configured to: if the first recognition result is the same as the predicted category corresponding to a current target to be detected, determine that the predicted category corresponding to the current target to be detected is a correct result; if the first recognition result is different from the predicted category corresponding to the current target to be detected, determine that the predicted category corresponding to the current target to be detected is a confused result, and determine, according to first confidence coefficients of the prediction categories that correspond to other targets to be detected adjacent to the current target to be detected and are determined as the correct results, that the predicted category corresponding to the current target to be detected is a second confidence coefficient of the first recognition result; and if the second confidence coefficient reaches a predetermined threshold, correct the predicted category corresponding to the current target to be detected to be the corresponding baseline category in the first recognition result.

Further, the processing module is configured to: average the first confidence coefficients of the prediction categories that correspond to other targets to be detected adjacent to the current target to be detected and are determined as the correct results to obtain that the predicted category corresponding to the current target to be detected is the second confidence coefficient of the first recognition result.

Further, the processing module is configured to: perform weighted average operation according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and determine that the predicted category corresponding to the current target to be detected is the second confidence coefficient of the first recognition result, wherein a weight of the first confidence coefficient of each predicted category determined as the correct result is greater than a weight of the first confidence coefficient of each predicted category determined as the confused result.

Further, the processing module is also configured to: acquire first sample data containing the reference target and labeled data corresponding to the first sample data from road test data; train a pre-built first detector according to the first sample data and the labeled data corresponding to the first sample data, so as to enable the first detector to correctly output the first recognition result for the reference target; acquire second sample data containing the target to be detected and labeled data corresponding to the second sample data from the road test data; and train a pre-built second detector according to the second sample data and the labeled data corresponding to the second sample data, so as to enable the second detector to correctly output the second recognition result for the target to be detected.

Further, the reference target is a lane guide sign, and the target to be detected is a road guide arrow.

Further, the comparison module is configured to: if the picture to be detected does not simultaneously contain the reference target and the target to be detected, compare the first recognition result or second recognition result first acquired with a second recognition result or first recognition result later acquired within a predetermined time interval.

An embodiment of a third aspect of the present application provides an electronic device, including: a memory, a processor and a computer program stored on the memory and operable on the processor, wherein the processor executes the program to implement the target detection method in running of vehicles of the above embodiments.

An embodiment of a fourth aspect of the present application provides a computer-readable storage medium. The computer-readable storage medium stores a computer instruction. The computer instruction is configured to cause a computer to implement the target detection method in running of vehicles of the above embodiments.

The embodiments of the present application can acquire a picture to be detected of a target vehicle in a running process; input the picture to be detected into a pre-trained first detector, so that the first detector outputs a first recognition result of a reference target contained in the picture to be detected; and input the picture to be detected into a pre-trained second detector, so that the second detector outputs a second recognition result of at least one target to be detected contained in the picture to be detected, each target to be detected and the reference target having a correspondence relationship. Thus the first recognition result and the second recognition result also have a certain correspondence relationship. The first recognition result is compared with the second recognition result for mutual verification, so that the second recognition result is corrected according to a comparison result to obtain the accuracy of a target recognition result. Thus, by means of comparison of the first recognition result corresponding to the reference target with the second recognition result corresponding to the target to be detected, and correction, mis-recognition or missing detection is avoided.

Additional aspects and advantages of the present application will be provided in the following descriptions, part of which will become apparent from the following descriptions or be learned through the practice of the present application.

### Brief Description of the Drawings

The above and/or additional aspects and advantages of the present application will become apparent and easily understandable from the following descriptions of the embodiments with reference to the accompanying drawings.
Fig. 1 is a flowchart of a target detection method in running of vehicles provided according to an embodiment of the present application;
Fig. 2 is a block diagram of a system capable of applying the target detection method in running of vehicles provided according to an embodiment of the present application;
Fig. 3 is a flowchart of algorithm labeling, training and actual prediction of a target detection method in running of vehicles provided according to an embodiment of the present application;
Fig. 4 is a flowchart of a target detection method in running of vehicles according to one embodiment of the present application;
Fig. 5 is a schematic diagram of a reference map of a target detection method in running of vehicles according to an embodiment of the present application;
Fig. 6 is a flowchart of an arbitration method in the target detection method in running of vehicles provided according to an embodiment of the present application;
Fig. 7 is a schematic block diagram of a target detection apparatus in running of vehicles according to an embodiment of the present application; and
Fig. 8 is a sample diagram of an electronic device according to an embodiment of the present application.

### Detailed Description of the Embodiments

The embodiments of the present application are described in detail below. Examples of the embodiments are shown in the accompanying drawings. The same or similar reference numerals represent the same or similar elements or elements having the same or similar functions throughout. The embodiments described below with reference to the drawings are exemplary, and are intended to explain the present application, and should not be construed as limiting the present application.

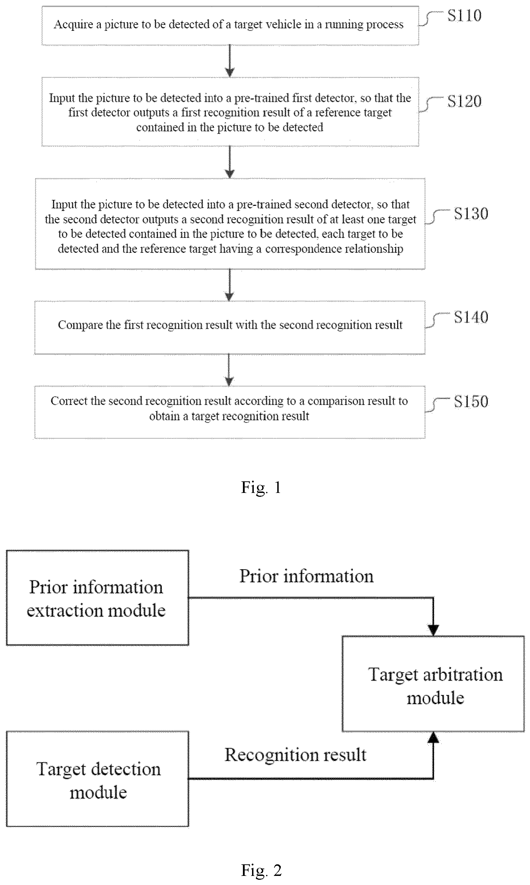

Fig. 1 is a flowchart of a target detection method in running of vehicles provided according to an embodiment of the present application. The method can be applied to a terminal. The terminal may include but not limited to one or more of a smart phone, a tablet, a portable computer or a vehicle-mounted device. In other embodiments, the method can also be applied to a server, which will not be specially limited.

Referring to Fig. 1, the target detection method in running of vehicles at least includes step S110 to step S150. The application of the method to a terminal is taken as an example below, which is described in detail below:
In step S110, a picture to be detected of a target vehicle in a running process is acquired.

In one embodiment an image acquisition device can be arranged on a target vehicle and is configured to acquire, in a running process of the target vehicle, a picture in front of the target vehicle in real time as the picture to be detected.

In step S120, the picture to be detected is input into a pre-trained first detector, so that the first detector outputs a first recognition result of a reference target contained in the picture to be detected.

The reference target may be used for assisting in recognizing a target of a target to be detected. For example, if the target to be detected is a guide arrow on the road, the reference target may be a lane guide sign on both sides of a lane.

In this embodiment, the terminal may input the picture to be detected into pre-trained first detector. The first detector may have target detection and recognition functions, and may recognize a target in the picture to be detected to output the first recognition result of the reference target contained in the picture to be detected. For example, if the reference target is the lane guide sign, the first recognition result may include a driving direction of each lane in the lane guide sign, a relative distance and relative positions between lanes, and the like.

In step S130, the picture to be detected is input into a pre-trained second detector, so that the second detector outputs a second recognition result of at least one target to be detected contained in the picture to be detected, each target to be detected and the reference target having a correspondence relationship.

The target to be detected may be an actual object target to be detected, such as the guide arrow on the road, a traffic light and a traffic sign.

In this embodiment, the terminal may also input the picture to be detected into the pre-trained second detector. The second detector also has the target detection and recognition functions. It should be understood that a difference between the first detector and the second detector is that they recognize different targets. The second detector may recognize the picture to be detected to output the second recognition result of at least one target to be detected contained in the picture to be detected. The second recognition result may include a predicted category corresponding to each target to be detected and a corresponding first confidence coefficient.

It should be noted that since there is a correspondence relationship between the reference target and the target to be detected, there should also be a correspondence relationship between the first recognition result and the second recognition result.

In one example, one or more target detection algorithms of the YOLO collection, the R-CNN collection or SSD can be used to train the first detector and the second detector.

In one embodiment of the present application, the method also includes:
first sample data containing the reference target and labeled data corresponding to the first sample data are acquired from road test data;
a pre-built first detector is trained according to the first sample data and the labeled data corresponding to the first sample data, so as to enable the first detector to correctly output the first recognition result for the reference target;
second sample data containing the target to be detected and labeled data corresponding to the second sample data are acquired from the road test data; and
a pre-built second detector is trained according to the second sample data and the labeled data corresponding to the second sample data, so as to enable the second detector to correctly output the second recognition result for the target to be detected.

In this embodiment, the road test data may be road data taken by a real vehicle, and may be a video or an image. The first sample data containing the reference target can be screened from the road test data, and the first sample data is labeled. For example, if the reference target is a lane guide sign, a lane type of each lane, the relative positions between the lanes, and the like may be labeled. A pre-built first detector is then trained according to the first sample data and the labeled data corresponding to the first sample data, so as to enable the first detector to correctly output the first recognition result for the reference target.

The second sample data containing the target to be detected can be screened from the road test data, and the second sample data is labeled. For example, if the target to be detected is a road guide arrow, a lane type corresponding to each road guide arrow, the relative positions between the lanes, and the like can be labeled. A pre-built second detector is then trained according to the second sample data and the labeled data corresponding to the second sample data, so as to enable the second detector to correctly output the second recognition result for the target to be detected.

Therefore, the accuracy of the recognition results of the first detector and the second detector is guaranteed through pre-training, and the accuracy of target detection after comparison is improved.

In step S140, the first recognition result is compared with the second recognition result.

In step S150, the second recognition result is corrected according to a comparison result to obtain a target recognition result.

The correction may be a process of correcting the second recognition result according to the first recognition result.

In one embodiment, since the first recognition result is recognized according to the reference target, the first recognition result may be used as priori information of the second recognition result, that is, the first recognition result may be used as a judgment basis for whether the second recognition result is correct. By means of comparing the first recognition result with the second recognition result, on the one hand, whether the second recognition result is correct can be verified, and a correct predicted category of a wrong second recognition result can be provided. Even if the target to be detected is sheltered, the accuracy of the target recognition result obtained after the correction can be guaranteed.

Based on the embodiment shown in Fig. 1, in one embodiment of the present application, the second recognition result includes a predicted category corresponding to each target to be detected and a first confidence coefficient, and the first recognition result includes a baseline category corresponding to each target to be detected. Step S150 specifically includes:
the second recognition result is corrected according to a comparison result to obtain a target recognition result, including:
if the first recognition result is the same as the predicted category corresponding to a current target to be detected, it is determined that the predicted category corresponding to the current target to be detected is a correct result;
if the first recognition result is different from the predicted category corresponding to the current target to be detected, it is determined that the predicted category corresponding to the current target to be detected is a confused result, and it is determined, according to first confidence coefficients of the prediction categories that correspond to other targets to be detected adjacent to the current target to be detected and are determined as the correct results, that the predicted category corresponding to the current target to be detected is a second confidence coefficient of the first recognition result; and
if the second confidence coefficient reaches a predetermined threshold, the predicted category corresponding to the current target to be detected is corrected to be the same predicted category as the first recognition result.

In this embodiment, the first recognition result includes the baseline category corresponding to each target to be detected. It should be understood that the first recognition result is a recognition result corresponding to the reference target, so the first recognition result can be used as the judgment basis of whether the second recognition result is correct. Therefore, the predicted category in the first recognition result can be used as the baseline category of each target to be detected. The lane guide sign used as the reference target is taken as an example. The first recognition result includes the lane type of each lane in the lane guide sign, such as a left turn lane, a straight lane and a right turn lane, and the relative positions between the lanes, such as the left turn lane being located on the left side of the straight lane, and the like. Therefore, the lane type of each lane contained in the first recognition result can be used as the baseline category of each lane guide arrow (i.e. the target to be detected) in the second recognition result.

According to the comparison result, if the first recognition result is the same as the predicted category corresponding to the current target to be detected, it means that the predicted category corresponding to the current target to be detected is a correct recognition result and can be saved. It should be understood that the picture to be detected may contain more than one target to be detected. For a case where there are a plurality of targets to be detected, the second recognition result may include the prediction categories corresponding to multiple (two or more) targets to be detected, the confidence coefficients and the relative positions between the targets to be detected. Thus, when the first recognition result is compared with the second recognition result, the comparison can be carried out according to the relative positions in sequence.

If the first recognition result is different from the predicted category corresponding to the current target to be detected, that is, if the baseline category, corresponding to the target to be detected, in the first recognition result is different from the predicted category of the target to be detected in the second recognition result, the predicted category corresponding to the current target to be detected can be determined as the confused result, that is, the second recognition result needs to be corrected. For the current target to be detected, the predicted category of which is determined as the confused result, it can be determined, according to the first confidence coefficients of the prediction categories that correspond to other targets to be detected adjacent to the current target to be detected and are determined as the correct results, that the predicted category corresponding to the current target to be detected shall be the second confidence coefficient of the first recognition result.

Specifically, for the current target to be detected, the predicted category of which is determined as the confused result, whether the comparison results of other targets to be detected adjacent to the current target to be detected have the prediction categories determined to be the correct results can be determined. If yes, it can be determined, according to the first confidence coefficients of the prediction categories that correspond to other targets to be detected and are determined as the correct results, that the predicted category corresponding to the current target to be detected shall be the second confidence coefficient of the first recognition result. It should be understood that the second confidence coefficient may be credibility for indicating that the first recognition result is correct. If the second confidence coefficient is larger, the credibility indicating that the predicted category shall be the baseline category is higher, and vice versa.

For example, three lane guide arrows (i.e. the targets to be detected) 1, 2 and 3 are disposed in sequence. The prediction categories of arrow 1 and arrow 3 are the same as the baseline category in the corresponding first recognition result, and are determined to be the correct results, while the predicted category corresponding to arrow 2 is different from the baseline category in the corresponding first recognition result. Thus, it can be determined, according to the first confidence coefficients of the prediction categories of arrow 1 and arrow 3, that the predicted category corresponding to arrow 2 shall be the second confidence coefficient of the baseline category in the first recognition result. It should be understood that if a similarity between the first recognition result and the second recognition result is higher, it is indicated that the first recognition result is more reliable. Therefore, the credibility indicating that the prediction categories determined to be the confused results shall be the corresponding baseline category is higher.

In one example, for the current target to be detected, the predicted category of which is determined to be the confused result, the first confidence coefficients of the prediction categories that correspond to other targets to be detected adjacent to the current target to be detected and are determined to be the correct results can be averaged to obtain the second confidence coefficient of the current target to be detected.

After the second confidence coefficient corresponding to the current target to be detected is determined, the second confidence coefficient may be compared with a preset predetermined threshold. If the second confidence coefficient reaches the predetermined threshold, that is, if the second confidence coefficient is greater than or equal to the predetermined threshold, the predicted category corresponding to the current target to be detected may be corrected to the corresponding baseline category, otherwise, the predicted category can be saved, the second recognition result that has been subjected to the above correction is output as the target recognition result.

Therefore, in the above embodiment, by means of determining, according to the first confidence coefficients of the prediction categories that correspond to other targets to be detected adjacent to the current target to be detected and are determined as the correct results, that the predicted category of the current target to be detected shall be the second confidence coefficient of the baseline category, and correcting, according to the second confidence coefficient, the predicted category corresponding to the current to be detected, the reasonability of correction can be ensured, thus ensuring the accuracy of the target recognition result obtained.

Based on the foregoing embodiments, in one embodiment of the present application, the step (that it is determined, according to the first confidence coefficients of the prediction categories that correspond to other targets to be detected adjacent to the current target to be detected and are determined as the correct results, that the predicted category corresponding to the current target shall be the second confidence coefficient of the first recognition result) includes:
the first confidence coefficients of the prediction categories that correspond to other targets to be detected adjacent to the current target to be detected and are determined as the correct results are averaged to obtain that the predicted category corresponding to the current target to be detected shall be the second confidence coefficient of the first recognition result.

In one embodiment of the present application, the step (that it is determined, according to the first confidence coefficients of the prediction categories that correspond to other targets to be detected adjacent to the current target to be detected and are determined as the correct results, that the predicted category corresponding to the current target shall be the second confidence coefficient of the first recognition result) includes:
weighted average operation is performed according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and it is determined that the predicted category corresponding to the current target to be detected shall be the second confidence coefficient of the first recognition result, wherein a weight of the first confidence coefficient of each predicted category determined as the correct result is greater than a weight of the first confidence coefficient of each predicted category determined as the confused result.

In this embodiment, it can not only be determined, according to the first confidence coefficients of the prediction categories that correspond to other targets to be detected adjacent to the current target to be detected and are determined as the correct results that the predicted category of the current target to be detected is the second confidence coefficient of the baseline category, but also determine the first confidence coefficients of the prediction categories that correspond to other adjacent targets to be detected and are determined as the confused results.

Specifically, the weighted average operation can be performed on the first confidence coefficients of the prediction categories determined as the correct results and the first confidence coefficients determined as the confused results, so as to determine that the predicted category corresponding to the current target to be detected shall be the second confidence coefficient of the baseline category in the first recognition result. Those skilled in the art can set corresponding weights according to the prior experience. The weights of the first confidence coefficients of the prediction categories determined to be the correct results are greater than the weights of the first confidence coefficients of the prediction categories determined to be the confused results, so as to ensure the reasonability of weight setting.

Based on the foregoing embodiments, in one embodiment of the present application, the step (that the first recognition result is compared with the second recognition result) includes:
if the picture to be detected does not simultaneously contain the reference target and the target to be detected, the first recognition result or second recognition result first acquired is compared with a second recognition result or first recognition result later acquired within a predetermined time interval.

In this embodiment, when the picture to be detected does not simultaneously contain the reference target and the target to be detected, the first recognition result or second recognition result first acquired can be compared with the second recognition result or first recognition result later acquired within the predetermined time interval, so that it can be ensured that the comparison can also be carried out even when the reference target and the target to be detected do not simultaneously appear in the picture to be detected. Meanwhile, by means of setting the predetermined time interval, the validness of the first recognition result or second recognition result first acquired can be ensured, thus avoiding a failure of the first recognition result or the second recognition result caused by a long running distance of a vehicle due to an extremely large time interval. It should be noted that those skilled in the art can set the predetermined time interval according to the preceded experience, such as 5 S and 10 S.

Based on the technical solutions of the above embodiment, one specific application scenario of the embodiment of the present application is introduced below:
Fig. 2 is a block diagram of a system capable of applying the target detection method in running of vehicles provided according to an embodiment of the present application.

Referring to Fig. 2, the system includes a prior information extraction module, a target detection module and a target arbitration module.

The prior information extraction module is configured to recognize the reference target contained in the picture to be detected and output corresponding prior information (i.e. the first recognition result). The target detection module is configured to recognize the target to be detected contained in the picture to be detected and output a corresponding recognition result (i.e. the second recognition result). The target arbitration module is configured to compare the prior information with the recognition result, so as to arbitrate (i.e. correct) the recognition result, and finally output a recognition result after arbitration, which is the target recognition result.

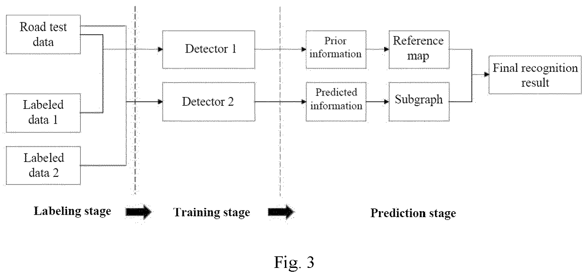

Fig. 3 is a flowchart of algorithm labeling, training and actual prediction of a target detection method in running of vehicles according to an embodiment of the present application. A description will be made below by taking the application of the method to a road guide arrow scenario as an example.

As shown in Fig. 3, the prior information refers to information that has been obtained before algorithm training or prediction. For a scenario of road guide arrow recognition, the prior information may come from multiple sources, including but not limited to information fused by one or more of traffic lights, point cloud data and lane indicators. Preferably, information including but not limited to the category, shape, position and the like of a lane is extracted from the lane guide sign of each road. Advantages are as follows: (1) The lane guide sign is usually located at a high place and is not easily sheltered. (2) The lane guide sign has a great contrast with the background and is easily accurately recognized.

In the algorithm labeling and training stage: two detectors need to be trained respectively for the lane guide sign (i.e. the reference target) and the road guide arrow (i.e. the target to be detected). The training is carried out in two rounds.

In the first round, a lane guide sign detector (detector 1) is obtained. In the labeling stage, a sample containing a lane guide sign, which can be a video or an image, is screened according to road test data collected by a real vehicle, and then the lane guide sign and each lane in the lane guide sign are labeled, including the position and category of the lane, thus obtaining a certain amount of labeled data. In the training phase, the sample and the corresponding labeled data are used for training. In one example, one or more target detection algorithms of the YOLO collection, R-CNN collection or SSD can be used for training to obtain the lane guide sign detector which can recognize various lane types.

The second round refers to the first round, in which, a road guide arrow detector (detector 2) is obtained. The difference is that the labeled data of the second round is for a lane sample in the road test data. After the two detectors are obtained, there are two purposes: In application I, the two detectors can be used for automatic labeling. In application II, the two detectors can be deployed to mass production vehicles to support intelligent driving underlying services.

In the algorithm prediction stage: application II is taken as an example. The detectors have been deployed inside a mass production vehicle. After the mass production vehicle runs on a road, when the system carries out road lane recognition, the system will input collected picture information into the two detectors respectively: The lane guide sign detector detects whether there is a lane guide sign. If yes, the detector detects lane indication information including the number of lanes and a lane type (i.e. the baseline category) at the same time. The road guide arrow detector detects whether a guide arrow appears in the picture. If yes, the detector detects a category (i.e. the predicted category) of the guide arrow.

It should be noted that there will be two cases in the picture to be detected: (1) The picture simultaneously contains the lane guide sign and the lane guide arrow on the road, which is referred to as a synchronous information scenario. (2) The lane guide sign and the lane guide arrow do not appear in the same picture. For example, a lane guide sign picture appears first, and a lane guide arrow picture then appears on the road after several seconds, or the lane guide arrow picture appears first, and the lane guide sign picture then appears after several seconds, which is referred to as an asynchronous information scenario. In case (1), the information output by the two detectors is highly consistent in theory and can echo each other. In case (2), the information output by the two detectors may have a deviation, that is, the information does not correspond to the same road, so it should be comprehensively analyzed.

Processes of target recognition and arbitration are described by taking case (1) as an example. The difference between case (2) and case (1) is the order of obtaining the prior information. The output information of the two detectors are aligned by setting atime window (i.e. the predetermined time interval). Within the time window, the information obtained first waits for the obtaining of another piece of information. If no data is obtained beyond the time window, a time window will be recreated by data obtained next time.

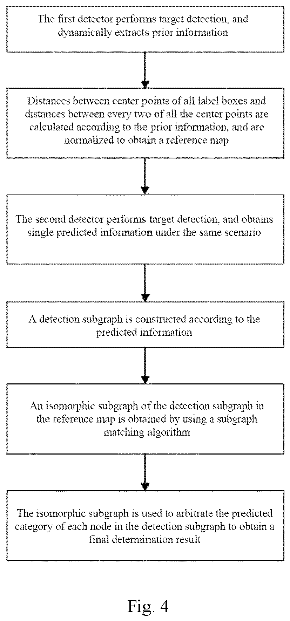

The whole detection process of case (1) is shown in Fig. 4. In the following description, the lane guide sign detector is referred to as a first detector, and the road guide arrow detector is referred to as a second detector.

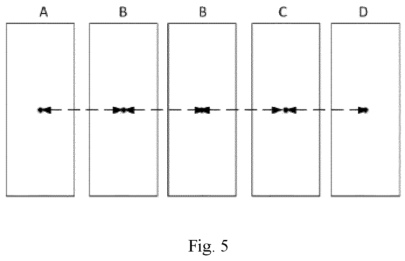

First, the first detector recognizes the position of the lane guide sign in the picture and lane guide information (the number of lanes, the relative positions of the guide lanes in the whole road, and the relative distance between the lanes) in the lane guide sign. As shown in Fig. 5, information of five lanes is contained, and there are four kinds of guide categories (i.e. A, B, C, and D). There is a relative distance between every two lanes, and the lanes are connected to form a reference map. Nodes of the reference map represent the lane guide categories, and weights of edges (connecting lines between the nodes) represent the relative distances, thus forming the prior information of the road.

Second, the second detector recognizes the road guide arrow in the picture, including road guide arrow information of one or more lanes, and obtains the predicted category of each road guide arrow and the relative positions and relative distances between the road guide arrows. By means of a perspective restoration technology, a subgraph similar to Fig. 5 is constructed to form predicted information of the road.

Third, the subgraph of the predicted information is matched with the reference map of the prior information, and two mapping manners (i.e. subgraph matching algorithm) are provided for this scenario: (1) If a road guide arrow of a current driving lane of a target vehicle is not sheltered by other vehicles, information of the road guide arrow can be used as a matching preference because the road guide arrow of the current lane is in the right front, with a small perspective realization degree, has a large proportion in the picture, and is accurately recognized more easily. The left and right lanes of the current lane are matched, and then the lanes on the next layer are matched. Weighted summation is performed on each matching result, with the weights decreasing layer by layer from the current lane. Finally, the matching manner with the highest score is selected as the lane matching result. (2) If the current driving lane is sheltered, the lanes with non-sheltered guide arrows are preferentially matched, which are searched from the left and right lanes. Matching starts from a first found non-sheltered lane that is the matching preference, and skips over sheltered lanes.

Fourth, the baseline category of each node (lane) is obtained according to an isomorphic subgraph. Finally, the baseline category and the predicted category are determined by a certain arbitration method to obtain a final category of each predicted target.

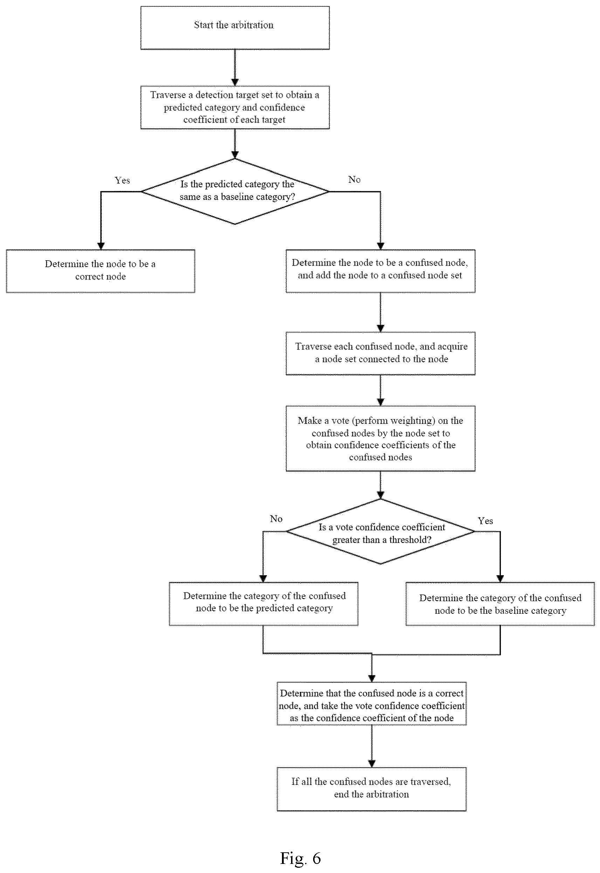

An embodiment of the present application also provides an arbitration method, as shown in Fig. 6:
(1) Traversing a detection target set (i.e. the first recognition result corresponding to at least one target to be detected); for each target (i.e. the target to be detected, which is a lane here): determining whether the predicted category is consistent with the baseline category: if the predicted category is consistent with the baseline category, considering the predicted category as correct recognition, and considering the node as a correct node; and if not, considering the node as a confused node which needs to be arbitrated.
(2) Traversing each confused node: acquiring a node set (that is, other targets to be detected adjacent to the current target to be detected) directly connected to the confused node; making a vote on each node that is determined to be correct to determine whether the predicted category of the node is correct. Specifically, the confidence coefficient (i.e. the first confidence coefficient) of each node is summed and averaged to obtain a confidence coefficient (i.e. the second confidence coefficient) that is considered as the baseline category of the confused node.
(3) Setting one threshold for the confidence coefficient, such as 0.8; when the confidence coefficient is greater than the threshold, determining that the category is the baseline category, otherwise, determining that the category is the predicted category. At the same time, a node with an updated category is considered as a correct node, and an average confidence coefficient of the neighboring nodes after voting is used as the confidence coefficient of the node.
(4) When the determination on all the confused nodes is completed, ending the arbitration.

Optionally, the nodes for voting in (2) may include confused nodes that are not arbitrated or confused nodes that are being arbitrated. At this time, the weighted average method is used to assign a larger weight to the correct nodes and assign a smaller weight to the confused nodes.

In a simple way, for the scenario of the road guide sign recognition, the guide information of other lanes can be accurately calculated on the basis of the relative positions and relative distances according to the current lane and guide information of a vehicle. On this basis, the intelligent driving system can make a decision plan according to an accurately recognized lane guidance to ensure the efficient development of its downstream applications.

Next, a target detection apparatus in running of vehicles provided according to an embodiment of the present application will be described with reference to the accompanying drawings.

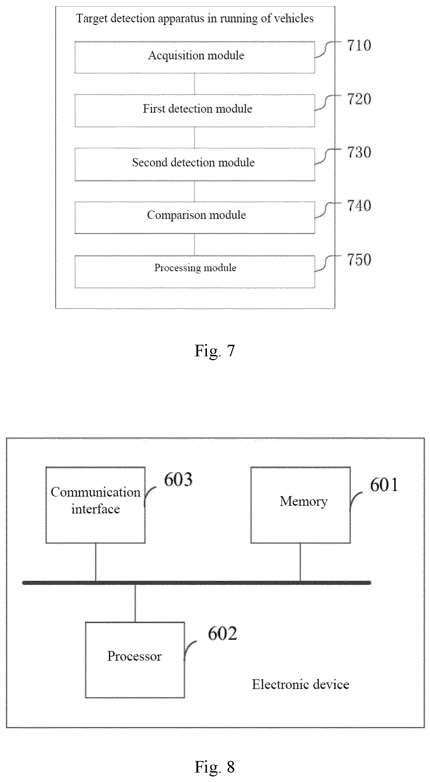

Fig. 7 is a schematic block diagram of a target detection apparatus in running of vehicles according to an embodiment of the present application.

As shown in Fig. 7, the target detection apparatus in running of vehicles includes:
an acquisition module 710, configured to acquire a picture to be detected of a target vehicle in a running process;
a first detection module 720, configured to input the picture to be detected into a pre-trained first detector, so that the first detector outputs a first recognition result of a reference target contained in the picture to be detected;
a second detection module 730, configured to input the picture to be detected into a pre-trained second detector, so that the second detector outputs a second recognition result of at least one target to be detected contained in the picture to be detected, each target to be detected and the reference target having a correspondence relationship;
a comparison module 740, configured to compare the first recognition result with the second recognition result; and
a processing module 750, configured to correct the second recognition result according to a comparison result to obtain a target recognition result.

Further, the second recognition result includes a predicted category corresponding to each target to be detected, and a first confidence coefficient; the first recognition result includes a baseline category corresponding to each target to be detected; and the processing module 750 is configured to: if the first recognition result is the same as the predicted category corresponding to a current target to be detected, determine that the predicted category corresponding to the current target to be detected is a correct result; if the first recognition result is different from the predicted category corresponding to the current target to be detected, determine that the predicted category corresponding to the current target to be detected is a confused result, and determine, according to first confidence coefficients of the prediction categories that correspond to other targets to be detected adjacent to the current target to be detected and are determined as the correct results, that the predicted category corresponding to the current target to be detected is a second confidence coefficient of the first recognition result; and if the second confidence coefficient reaches a predetermined threshold, correct the predicted category corresponding to the current target to be detected to be the same predicted category as the first recognition result.

Further, the processing module 750 is configured to: average the first confidence coefficients of the prediction categories that correspond to other targets to be detected adjacent to the current target to be detected and are determined as the correct results to obtain that the predicted category corresponding to the current target to be detected is the second confidence coefficient of the first recognition result.

Further, the processing module 750 is configured to: perform weighted summation operation according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and determine that the predicted category corresponding to the current target to be detected is the second confidence coefficient of the first recognition result, wherein a weight of the first confidence coefficient of each predicted category determined as the correct result is greater than a weight of the first confidence coefficient of each predicted category determined as the confused result.

Further, the processing module 750 is also configured to: acquire first sample data containing the reference target and labeled data corresponding to the first sample data from road test data; train a pre-built first detector according to the first sample data and the labeled data corresponding to the first sample data, so as to enable the first detector to correctly output the first recognition result for the reference target; acquire second sample data containing the target to be detected and labeled data corresponding to the second sample data from the road test data; and train a pre-built second detector according to the second sample data and the labeled data corresponding to the second sample data, so as to enable the second detector to correctly output the second recognition result for the target to be detected.

Further, the reference target is a lane guide sign, and the target to be detected is a road guide arrow.

Further, the comparison module 740 is configured to: if the picture to be detected does not simultaneously contain the reference target and the target to be detected, compare the first recognition result or second recognition result first acquired with a second recognition result or first recognition result later acquired within a predetermined time interval.

It should be noted that the foregoing explanation of the embodiment of the target detection method in running of vehicles is also applicable to the target detection apparatus in running of vehicles of this embodiment, and repeated descriptions will be omitted here.

The target detection apparatus in running of vehicles provided according to the embodiment of the present application can acquire a picture to be detected of a target vehicle in a running process; input the picture to be detected into a pre-trained first detector, so that the first detector outputs a first recognition result of a reference target contained in the picture to be detected; and input the picture to be detected into a pre-trained second detector, so that the second detector outputs a second recognition result of at least one target to be detected contained in the picture to be detected, each target to be detected and the reference target having a correspondence relationship. Thus the first recognition result and the second recognition result also have a certain correspondence relationship. The first recognition result is compared with the second recognition result for mutual verification, so that the second recognition result is corrected according to a comparison result to obtain the accuracy of a target recognition result. Thus, by means of comparison of the first recognition result corresponding to the reference target with the second recognition result corresponding to the target to be detected, and correction, mis-recognition or missing detection is avoided.

Fig. 8 is a schematic structural diagram of an electronic device provided by an embodiment of the present application. The electronic device may include:
a memory 601, a processor 602, and a computer program stored in the memory 601 and executable on the processor 602.

The processor 602, when executing programs, implements the target detection method in running of vehicles provided in the above embodiment.

Further, the electronic device also includes:
a communication interface 603, configured to achieve communication between the memory 601 and the processor 602.

The memory 601 is configured to store computer programs that are executable on the processor 602.

The memory 601 may include a high-speed random access memory (RAM), or a non-volatile memory, for example, at least one disk memory.

If the memory 601, the processor 602, and the communication interface 603 are independently implemented, the communication interface 603, the memory 601, and the processor 602 can be connected to each other through a bus and complete communication with each other. The bus may be an industry standard architecture (ISA) bus, a peripheral component interconnection (PCI) bus, or an extended industry standard architecture (EISA) bus, etc. The bus may be divided into an address bus, a data bus, a control bus, and the like. For ease of representation, only a thick line is used in Fig. 6, but it does not mean that there is only one bus or one type of bus.

Optionally, in terms of specific implementation, if the memory 601, the processor 602 and the communication interface 603 are integrated on one chip, the memory 601, the processor 602 and the communication interface 603 can communicate with each other through internal interfaces.

The processor 602 may be a central processing unit (CPU), or an application specific integrated circuit (ASIC), or is configured for implementing one or more ICs of the embodiment of the present application.

An embodiment of the present application further provides a computer-readable storage medium storing a computer program. The program, when executed by a processor, implements the above target detection method in running of vehicles.

In the description of the present specification, descriptions of the reference terms such as "one embodiment", "some embodiments", "examples", "specific examples," or "some examples" mean that specific features, structures, materials or characteristics described in combination with the embodiments or examples are included in at least one embodiment or example of the present application. In this specification, the schematic representations of the above terms do not necessarily refer to the same embodiment or example. Moreover, the described specific features, structures, materials or characteristics may be combined in any one or N embodiments or examples in an appropriate manner. In addition, those skilled in the art can connect and combine the different embodiments or examples and the features of the different embodiments or examples described in this specification without contradicting each other.

In addition, the terms "first" and "second" are used for descriptive purposes only and are not to be understood to indicate or imply relative importance or to imply the number of indicated technical features. Therefore, features defined by "first" and "second" can explicitly instruct or impliedly include at least one feature. In the description of the present application, unless expressly specified otherwise, the meaning of "N" is at least two, such as two and three.

Any process or method description in the flowchart or described in other ways herein can be understood as a module, segment or part of a code that includes one or N executable instructions for implementing specific logical functions or steps of the process. The scope of the preferred embodiments of the present application includes additional implementations, which may not be in the order shown or discussed, including performing functions in a substantially simultaneous manner or in the reverse order according to the functions involved. This should be understood by those skilled in the art to which the embodiments of the present application belong.

The logic and/or steps represented in flowcharts or otherwise described herein, for example, may be considered as an ordered list of executable instructions for implementing logical functions, may be specifically implemented in any computer-readable medium for use with, or in conjunction with, an instruction execution system, apparatus, or device (such as a computer-based system, a system including a processor, or other system that can acquire instructions from and execute instructions from the instruction execution system, apparatus, or device). In terms of this specification, a "computer-readable medium" can be any apparatus that can contain, store, communicate, propagate, or transport the program for use by or in conjunction with an instruction execution system, apparatus, or device. More specific examples (non-exhaustive list) of computer-readable media include the following: an electrical connection part (an electronic apparatus) with one or N wiring, a portable computer disk cartridge (a magnetic apparatus), a random access memory (RAM), a read only memory (ROM), an erasable editable read only memory (EPROM or flash memory), a fiber optic apparatus, and a portable compact disc read only memory (CDROM). In addition, the computer-readable medium may even be paper or other suitable media on which the program may be printed, as optical scanning can be performed, for example, through the paper or other media, and next, editing and interpretation are performed; other suitable manners are used for performing processing if necessary, so as to obtain the program in an electronic manner; and the program is then stored in a computer memory.

It should be understood that each part of the present application can be implemented by hardware, software, firmware or a combination thereof. In the above implementation modes, N steps or methods can be implemented by software or firmware stored in a memory and executed by a suitable instruction execution system. For example, if it is implemented by hardware, as in another implementation, it can be implemented by any one or a combination of the following technologies known in the art: discrete logic circuits with logic gate circuits used to realize logic functions for digital signals, application-specific integrated circuits with suitable combinational logic gate circuits, programmable gate arrays (PGAs), field programmable gate arrays (FPGAs), etc.

Those of ordinary skill in the art can understand that implementation of all or a part of the steps in the method of the foregoing embodiments can be completed by a program that instructs relevant hardware. The program may be stored in a computer-readable storage medium. The program can include one of or a combination of the steps of the method embodiment.

In addition, all functional units in all the embodiments of the present invention can be integrated into one processing module, or each unit can physically exist alone, or two or more units can be integrated in one module. The above integrated modules can be implemented in the form of hardware, or can be implemented in the form of software functional modules. The integrated module, if implemented in the form of a software functional unit and sold or used as a standalone product, may be stored in a computer-readable storage medium.

The above-mentioned storage medium may be a read-only memory, a magnetic disk or an optical disk, and the like. Although the embodiments of the present application have been shown and described above, it can be understood that the above embodiments are exemplary and should not be construed as limiting the present application. Those of ordinary skill in the art can make changes, modifications, substitutions, and variations to the above-mentioned embodiments within the scope of the present invention.

## Claims

1. A target detection method for autonomous vehicles, comprising the following steps:
acquiring, by an image acquisition device arranged on a target vehicle a picture in front of the target vehicle in real time as the picture to be detected;
inputting the picture to be detected into a pre-trained first detector, so that the first detector outputs a first recognition result of a reference target contained in the picture to be detected, wherein the first detector has target detection and recognition functions;
inputting the picture to be detected into a pre-trained second detector, so that the second detector outputs a second recognition result of at least one target to be detected contained in the picture to be detected, each target to be detected and the reference target having a correspondence relationship, wherein the second detector has target detection and recognition functions;
comparing the first recognition result with the second recognition result; and
correcting the second recognition result according to a comparison result to obtain a target recognition result,
wherein the second recognition result comprises a predicted category corresponding to each target to be detected and a first confidence coefficient, and the first recognition result comprises a baseline category corresponding to each target to be detected;
the correcting the second recognition result according to a comparison result to obtain a target recognition result comprises:
if the first recognition result is the same as the predicted category corresponding to a current target to be detected, determining that the predicted category corresponding to the current target to be detected is a correct result;
**characterised in that**
if the first recognition result is different from the predicted category corresponding to the current target to be detected, determining that the predicted category corresponding to the current target to be detected is a confused result, and determining, according to first confidence coefficients of the prediction categories that correspond to other targets to be detected adjacent to the current target to be detected and are determined as the correct results, that the predicted category corresponding to the current target to be detected is a second confidence coefficient of the first recognition result; and
if the second confidence coefficient reaches a predetermined threshold, correcting the predicted category corresponding to the current target to be detected to be the corresponding baseline category in the first recognition result.

2. The method according to claim 1, wherein the determining, according to first confidence coefficients of the prediction categories that correspond to other targets to be detected adjacent to the current target to be detected and are determined as the correct results, that the predicted category corresponding to the current target to be detected is a second confidence coefficient of the first recognition result comprises:
averaging the first confidence coefficients of the prediction categories that correspond to other targets to be detected adjacent to the current target to be detected and are determined as the correct results to obtain that the predicted category corresponding to the current target to be detected is the second confidence coefficient of the first recognition result.

3. The method according to claim 1, wherein the determining, according to first confidence coefficients of the prediction categories that correspond to other targets to be detected adjacent to the current target to be detected and are determined as the correct results, that the predicted category corresponding to the current target to be detected is a second confidence coefficient of the first recognition result comprises:
performing weighted average operation according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and determining that the predicted category corresponding to the current target to be detected is the second confidence coefficient of the first recognition result, wherein a weight of the first confidence coefficient of each predicted category determined as the correct result is greater than a weight of the first confidence coefficient of each predicted category determined as the confused result.

4. The method according to claim 1, further comprising:
acquiring first sample data containing the reference target and labeled data corresponding to the first sample data from road test data;
training a pre-built first detector according to the first sample data and the labeled data corresponding to the first sample data, so as to enable the first detector to correctly output the first recognition result for the reference target;
acquiring second sample data containing the target to be detected and labeled data corresponding to the second sample data from the road test data; and
training a pre-built second detector according to the second sample data and the labeled data corresponding to the second sample data, so as to enable the second detector to correctly output the second recognition result for the target to be detected.

5. The method according to any one of claims 1 to 4, wherein the reference target is a lane guide sign, and the target to be detected is a road guide arrow.

6. The method according to any one of claims 1 to 4, wherein the comparing the first recognition result with the second recognition result comprises:
if the picture to be detected does not simultaneously contain the reference target and the target to be detected, comparing the first recognition result or second recognition result first acquired with a second recognition result or first recognition result later acquired within a predetermined time interval.

7. A target detection apparatus for autonomous vehicles, comprising:
an acquisition module, configured to acquire, by an image acquisition device arranged on a target vehicle a picture in front of the target vehicle in real time as the picture to be detected;
a first detection module, configured to input the picture to be detected into a pre-trained first detector, so that the first detector outputs a first recognition result of a reference target contained in the picture to be detected, wherein the first detector has target detection and recognition functions;
a second detection module, configured to input the picture to be detected into a pre-trained second detector, so that the second detector outputs a second recognition result of at least one target to be detected contained in the picture to be detected, each target to be detected and the reference target having a correspondence relationship, wherein the second detector has target detection and recognition functions;
a comparison module, configured to compare the first recognition result with the second recognition result; and
a processing module, configured to correct the second recognition result according to a comparison result to obtain a target recognition result,
wherein the second recognition result comprises a predicted category corresponding to each target to be detected and a first confidence coefficient, and the first recognition result comprises a baseline category corresponding to each target to be detected;
the processing module is configured to: if the first recognition result is the same as the predicted category corresponding to a current target to be detected, determine that the predicted category corresponding to the current target to be detected is a correct result;
**characterised in that**
if the first recognition result is different from the predicted category corresponding to the current target to be detected, determine that the predicted category corresponding to the current target to be detected is a confused result, and determine, according to first confidence coefficients of the prediction categories that correspond to other targets to be detected adjacent to the current target to be detected and are determined as the correct results, that the predicted category corresponding to the current target to be detected is a second confidence coefficient of the first recognition result; and
if the second confidence coefficient reaches a predetermined threshold, correct the predicted category corresponding to the current target to be detected to be the corresponding baseline category in the first recognition result.

8. The apparatus according to claim 7, wherein the processing module is configured to:
average the first confidence coefficients of the prediction categories that correspond to other targets to be detected adjacent to the current target to be detected and are determined as the correct results to obtain that the predicted category corresponding to the current target to be detected is the second confidence coefficient of the first recognition result.

9. The apparatus according to claim 7, wherein the processing module is configured to:
perform weighted average operation according to the first confidence coefficients of the prediction categories that correspond to other targets to be detected adjacent to the current target to be detected and are determined as the correct results and first confidence coefficients of the prediction categories that correspond to other targets to be detected adjacent to the current target to be detected and are determined as the confused results, and determine that the predicted category corresponding to the current target to be detected is the second confidence coefficient of the first recognition result, wherein a weight of the first confidence coefficient of each predicted category determined as the correct result is greater than a weight of the first confidence coefficient of each predicted category determined as the confused result.

10. The apparatus according to claim 7, wherein the processing module is configured to:
acquire first sample data containing the reference target and labeled data corresponding to the first sample data from road test data;
train a pre-built first detector according to the first sample data and the labeled data corresponding to the first sample data, so as to enable the first detector to correctly output the first recognition result for the reference target;
acquire second sample data containing the target to be detected and labeled data corresponding to the second sample data from the road test data; and
train a pre-built second detector according to the second sample data and the labeled data corresponding to the second sample data, so as to enable the second detector to correctly output the second recognition result for the target to be detected.

11. The apparatus according to any one of claims 7 to 10, wherein the reference target is a lane guide sign, and the target to be detected is a road guide arrow.

12. The apparatus according to any one of claims 7 to 10, wherein the comparison module is configured to:
if the picture to be detected does not simultaneously contain the reference target and the target to be detected, compare the first recognition result or second recognition result first acquired with a second recognition result or first recognition result later acquired within a predetermined time interval.

13. An electronic device, comprising a memory, a processor and a computer program stored on the memory and operable on the processor, wherein the processor executes the program to implement the target detection method in running of vehicles according to any one of claims 1 to 6.

14. A computer-readable storage medium, storing a computer program, wherein the program, when executed by a processor, implements the target detection method in running of vehicles according to any one of claims 1 to 6.

## Patentansprüche

1. Zieldetektionsverfahren für autonome Fahrzeuge, umfassend die folgenden Schritte:
Erfassen, durch ein an einem Zielfahrzeug angeordnetes Bilderfassungsgerät, eines Bildes vor dem Zielfahrzeug in Echtzeit als das zu detektierende Bild;
Eingeben des zu detektierenden Bildes in einen vortrainierten ersten Detektor, sodass der erste Detektor ein erstes Erkennungsergebnis eines in dem zu detektierenden Bild enthaltenen Referenzziels ausgibt, wobei der erste Detektor Zieldetektions- und Erkennungsfunktionen aufweist;
Eingeben des zu detektierenden Bildes in einen vortrainierten zweiten Detektor, sodass der zweite Detektor ein zweites Erkennungsergebnis mindestens eines in dem zu detektierenden Bild enthaltenen zu detektierenden Ziels ausgibt, wobei jedes zu detektierende Ziel und das Referenzziel eine Entsprechungsbeziehung aufweisen, wobei der zweite Detektor Zieldetektions- und Erkennungsfunktionen aufweist;
Vergleichen des ersten Erkennungsergebnisses mit dem zweiten Erkennungsergebnis; und
Korrigieren des zweiten Erkennungsergebnisses gemäß einem Vergleichsergebnis, um ein Zielerkennungsergebnis zu erhalten,
wobei das zweite Erkennungsergebnis eine jedem zu detektierenden Ziel entsprechende vorhergesagte Kategorie und einen ersten Konfidenzkoeffizienten umfasst und das erste Erkennungsergebnis eine jedem zu detektierenden Ziel entsprechende Basiskategorie umfasst;
das Korrigieren des zweiten Erkennungsergebnisses gemäß einem Vergleichsergebnis, um ein Zielerkennungsergebnis zu erhalten, umfasst:
falls das erste Erkennungsergebnis gleich der einem aktuellen zu detektierenden Ziel entsprechenden vorhergesagten Kategorie ist, Bestimmen, dass die dem aktuellen zu detektierenden Ziel entsprechende vorhergesagte Kategorie ein korrektes Ergebnis ist;
**dadurch gekennzeichnet, dass**
falls das erste Erkennungsergebnis verschieden von der dem aktuellen zu detektierenden Ziel entsprechenden vorhergesagten Kategorie ist, Bestimmen, dass die dem aktuellen zu detektierenden Ziel entsprechende vorhergesagte Kategorie ein verwechseltes Ergebnis ist, und Bestimmen, gemäß ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, dass die dem aktuellen zu detektierenden Ziel entsprechende vorhergesagte Kategorie ein zweiter Konfidenzkoeffizient des ersten Erkennungsergebnisses ist; und falls der zweite Konfidenzkoeffizient einen vorbestimmten Schwellenwert erreicht, Korrigieren der dem aktuellen zu detektierenden Ziel entsprechenden vorhergesagten Kategorie zu der entsprechenden Basiskategorie in dem ersten Erkennungsergebnis.

2. Verfahren gemäß Anspruch 1, wobei das Bestimmen, gemäß ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, dass die dem aktuellen zu detektierenden Ziel entsprechende vorhergesagte Kategorie ein zweiter Konfidenzkoeffizient des ersten Erkennungsergebnisses ist, umfasst:
Mitteln der ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, um zu erhalten, dass die dem aktuellen zu detektierenden Ziel entsprechende vorhergesagte Kategorie der zweite Konfidenzkoeffizient des ersten Erkennungsergebnisses ist.

3. Verfahren gemäß Anspruch 1, wobei das Bestimmen, gemäß ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, dass die dem aktuellen zu detektierenden Ziel entsprechende vorhergesagte Kategorie ein zweiter Konfidenzkoeffizient des ersten Erkennungsergebnisses ist, umfasst:
Durchführen einer gewichteten Mittelwertoperation gemäß den ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, und ersten Konfidenzkoeffizienten der Vorhersagekategorien, die anderen, dem aktuellen zu detektierenden Ziel benachbarten zu detektierenden Zielen entsprechen und als die verwechselten Ergebnisse bestimmt sind, und Bestimmen, dass die dem aktuellen zu detektierenden Ziel entsprechende vorhergesagte Kategorie der zweite Konfidenzkoeffizient des ersten Erkennungsergebnisses ist, wobei ein Gewicht des ersten Konfidenzkoeffizienten jeder als das korrekte Ergebnis bestimmten vorhergesagten Kategorie größer als ein Gewicht des ersten Konfidenzkoeffizienten jeder als das verwechselte Ergebnis bestimmten vorhergesagten Kategorie ist.

4. Verfahren gemäß Anspruch 1, ferner umfassend:
Erfassen von ersten Probendaten, die das Referenzziel enthalten, und von den ersten Probendaten entsprechenden annotierten Daten aus Straßentestdaten;
Trainieren eines vorab erstellten ersten Detektors gemäß den ersten Probendaten und den den ersten Probendaten entsprechenden annotierten Daten, um es dem ersten Detektor zu ermöglichen, das erste Erkennungsergebnis für das Referenzziel korrekt auszugeben;
Erfassen von zweiten Probendaten, die das zu detektierende Ziel enthalten, und von den zweiten Probendaten entsprechenden annotierten Daten aus den Straßentestdaten; und
Trainieren eines vorab erstellten zweiten Detektors gemäß den zweiten Probendaten und den den zweiten Probendaten entsprechenden annotierten Daten, um es dem zweiten Detektor zu ermöglichen, das zweite Erkennungsergebnis für das zu detektierende Ziel korrekt auszugeben.

5. Verfahren gemäß einem der Ansprüche 1 bis 4, wobei das Referenzziel ein Fahrspurführungsschild ist und das zu detektierende Ziel ein Straßenführungspfeil ist.

6. Verfahren gemäß einem der Ansprüche 1 bis 4, wobei das Vergleichen des ersten Erkennungsergebnisses mit dem zweiten Erkennungsergebnis umfasst:
falls das zu detektierende Bild nicht gleichzeitig das Referenzziel und das zu detektierende Ziel enthält, Vergleichen des ersten Erkennungsergebnisses oder zweiten Erkennungsergebnisses, das zuerst erfasst wurde, mit einem zweiten Erkennungsergebnis oder ersten Erkennungsergebnis, das später innerhalb eines vorbestimmten Zeitintervalls erfasst wurde.

7. Zieldetektionsvorrichtung für autonome Fahrzeuge, umfassend:
ein Erfassungsmodul, das dazu konfiguriert ist, durch ein an einem Zielfahrzeug angeordnetes Bilderfassungsgerät ein Bild vor dem Zielfahrzeug in Echtzeit als das zu detektierende Bild zu erfassen;
ein erstes Detektionsmodul, das dazu konfiguriert ist, das zu detektierende Bild in einen vortrainierten ersten Detektor einzugeben, sodass der erste Detektor ein erstes Erkennungsergebnis eines in dem zu detektierenden Bild enthaltenen Referenzziels ausgibt, wobei der erste Detektor Zieldetektions- und Erkennungsfunktionen aufweist;
ein zweites Detektionsmodul, das dazu konfiguriert ist, das zu detektierende Bild in einen vortrainierten zweiten Detektor einzugeben, sodass der zweite Detektor ein zweites Erkennungsergebnis mindestens eines in dem zu detektierenden Bild enthaltenen zu detektierenden Ziels ausgibt, wobei jedes zu detektierende Ziel und das Referenzziel eine Entsprechungsbeziehung aufweisen, wobei der zweite Detektor Zieldetektions- und Erkennungsfunktionen aufweist;
ein Vergleichsmodul, das dazu konfiguriert ist, das erste Erkennungsergebnis mit dem zweiten Erkennungsergebnis zu vergleichen; und
ein Verarbeitungsmodul, das dazu konfiguriert ist, das zweite Erkennungsergebnis gemäß einem Vergleichsergebnis zu korrigieren, um ein Zielerkennungsergebnis zu erhalten,
wobei das zweite Erkennungsergebnis eine jedem zu detektierenden Ziel entsprechende vorhergesagte Kategorie und einen ersten Konfidenzkoeffizienten umfasst und das erste Erkennungsergebnis eine jedem zu detektierenden Ziel entsprechende Basiskategorie umfasst;
das Verarbeitungsmodul dazu konfiguriert ist: falls das erste Erkennungsergebnis gleich der einem aktuellen zu detektierenden Ziel entsprechenden vorhergesagten Kategorie ist, zu bestimmen, dass die dem aktuellen zu detektierenden Ziel entsprechende vorhergesagte Kategorie ein korrektes Ergebnis ist;
**dadurch gekennzeichnet, dass**
falls das erste Erkennungsergebnis verschieden von der dem aktuellen zu detektierenden Ziel entsprechenden vorhergesagten Kategorie ist, zu bestimmen, dass die dem aktuellen zu detektierenden Ziel entsprechende vorhergesagte Kategorie ein verwechseltes Ergebnis ist, und gemäß ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, zu bestimmen, dass die dem aktuellen zu detektierenden Ziel entsprechende vorhergesagte Kategorie ein zweiter Konfidenzkoeffizient des ersten Erkennungsergebnisses ist; und
falls der zweite Konfidenzkoeffizient einen vorbestimmten Schwellenwert erreicht, die dem aktuellen zu detektierenden Ziel entsprechende vorhergesagte Kategorie zu der entsprechenden Basiskategorie in dem ersten Erkennungsergebnis zu korrigieren.

8. Vorrichtung gemäß Anspruch 7, wobei das Verarbeitungsmodul dazu konfiguriert ist:
die ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, zu mitteln, um zu erhalten, dass die dem aktuellen zu detektierenden Ziel entsprechende vorhergesagte Kategorie der zweite Konfidenzkoeffizient des ersten Erkennungsergebnisses ist.

9. Vorrichtung gemäß Anspruch 7, wobei das Verarbeitungsmodul dazu konfiguriert ist:
eine gewichtete Mittelwertoperation gemäß den ersten Konfidenzkoeffizienten der Vorhersagekategorien, die anderen, dem aktuellen zu detektierenden Ziel benachbarten zu detektierenden Zielen entsprechen und als die korrekten Ergebnisse bestimmt sind, und ersten Konfidenzkoeffizienten der Vorhersagekategorien, die anderen, dem aktuellen zu detektierenden Ziel benachbarten zu detektierenden Zielen entsprechen und als die verwechselten Ergebnisse bestimmt sind, durchzuführen und zu bestimmen, dass die dem aktuellen zu detektierenden Ziel entsprechende vorhergesagte Kategorie der zweite Konfidenzkoeffizient des ersten Erkennungsergebnisses ist, wobei ein Gewicht des ersten Konfidenzkoeffizienten jeder als das korrekte Ergebnis bestimmten vorhergesagten Kategorie größer als ein Gewicht des ersten Konfidenzkoeffizienten jeder als das verwechselte Ergebnis bestimmten vorhergesagten Kategorie ist.

10. Vorrichtung gemäß Anspruch 7, wobei das Verarbeitungsmodul dazu konfiguriert ist:
erste Probendaten, die das Referenzziel enthalten, und den ersten Probendaten entsprechende annotierte Daten aus Straßentestdaten zu erfassen;
einen vorab erstellten ersten Detektor gemäß den ersten Probendaten und den den ersten Probendaten entsprechenden annotierten Daten zu trainieren, um es dem ersten Detektor zu ermöglichen, das erste Erkennungsergebnis für das Referenzziel korrekt auszugeben;
zweite Probendaten, die das zu detektierende Ziel enthalten, und den zweiten Probendaten entsprechende annotierte Daten aus den Straßentestdaten zu erfassen; und
einen vorab erstellten zweiten Detektor gemäß den zweiten Probendaten und den den zweiten Probendaten entsprechenden annotierten Daten zu trainieren, um es dem zweiten Detektor zu ermöglichen, das zweite Erkennungsergebnis für das zu detektierende Ziel korrekt auszugeben.

11. Vorrichtung gemäß einem der Ansprüche 7 bis 10, wobei das Referenzziel ein Fahrspurführungsschild ist und das zu detektierende Ziel ein Straßenführungspfeil ist.

12. Vorrichtung gemäß einem der Ansprüche 7 bis 10, wobei das Vergleichsmodul dazu konfiguriert ist:
falls das zu detektierende Bild nicht gleichzeitig das Referenzziel und das zu detektierende Ziel enthält, das erste Erkennungsergebnis oder zweite Erkennungsergebnis, das zuerst erfasst wurde, mit einem zweiten Erkennungsergebnis oder ersten Erkennungsergebnis, das später innerhalb eines vorbestimmten Zeitintervalls erfasst wurde, zu vergleichen.

13. Elektronisches Gerät, umfassend einen Speicher, einen Prozessor und ein auf dem Speicher gespeichertes und auf dem Prozessor lau,ähiges Computerprogramm, wobei der Prozessor das Programm ausführt, um das Zieldetektionsverfahren beim Fahren von Fahrzeugen gemäß einem der Ansprüche 1 bis 6 zu implementieren.´

14. Computerlesbares Speichermedium, das ein Computerprogramm speichert, wobei das Programm, wenn es von einem Prozessor ausgeführt wird, das Zieldetektionsverfahren beim Fahren von Fahrzeugen gemäß einem der Ansprüche 1 bis 6 implementiert.

## Revendications

1. Procédé de détection de cible pour véhicules autonomes, comprenant les étapes suivantes :
acquisition, par un dispositif d'acquisition d'images agencé sur un véhicule cible, d'une image située devant le véhicule cible en temps réel, en tant qu'image à détecter ;
application en entrée de l'image à détecter dans un premier détecteur pré-entraîné, de sorte que le premier détecteur délivre en sortie un premier résultat de reconnaissance d'une cible de référence contenue dans l'image à détecter, le premier détecteur présentant des fonctions de détection et de reconnaissance de cible ;
application en entrée de l'image à détecter dans un second détecteur pré-entraîné, de sorte que le second détecteur délivre en sortie un second résultat de reconnaissance d'au moins une cible à détecter contenue dans l'image à détecter, chaque cible à détecter et la cible de référence présentant une relation de correspondance, le second détecteur présentant des fonctions de détection et de reconnaissance de cible ;
comparaison du premier résultat de reconnaissance avec le second résultat de reconnaissance ; et
correction du second résultat de reconnaissance conformément à un résultat de comparaison afin d'obtenir un résultat de reconnaissance de cible,
dans lequel le second résultat de reconnaissance comprend une catégorie prédite correspondant à chaque cible à détecter et un premier coefficient de confiance, et le premier résultat de reconnaissance comprend une catégorie de référence correspondant à chaque cible à détecter ;
la correction du second résultat de reconnaissance conformément à un résultat de comparaison afin d'obtenir un résultat de reconnaissance de cible comprend :
si le premier résultat de reconnaissance est identique à la catégorie prédite correspondant à une cible à détecter actuelle, la détermination selon laquelle la catégorie prédite correspondant à la cible à détecter actuelle est un résultat correct ;
**caractérisé en ce que**
si le premier résultat de reconnaissance est différent de la catégorie prédite correspondant à la cible à détecter actuelle, la détermination selon laquelle la catégorie prédite correspondant à la cible à détecter actuelle est un résultat ambigu, et la détermination selon laquelle, conformément à des premiers coefficients de confiance des catégories de prédiction qui correspondent à d'autres cibles à détecter adjacentes à la cible à détecter actuelle et qui sont déterminées comme les résultats corrects, la catégorie prédite correspondant à la cible à détecter actuelle correspond à un second coefficient de confiance du premier résultat de reconnaissance ; et
si le second coefficient de confiance atteint un seuil prédéterminé, la correction de la catégorie prédite correspondant à la cible à détecter actuelle pour qu'elle corresponde à la catégorie de référence correspondante dans le premier résultat de reconnaissance.

2. Procédé selon la revendication 1, dans lequel la détermination selon laquelle, conformément à des premiers coefficients de confiance des catégories de prédiction qui correspondent à d'autres cibles à détecter adjacentes à la cible à détecter actuelle et qui sont déterminées comme les résultats corrects, la catégorie prédite correspondant à la cible à détecter actuelle correspond à un second coefficient de confiance du premier résultat de reconnaissance comprend :
le moyennage des premiers coefficients de confiance des catégories de prédiction qui correspondent à d'autres cibles à détecter adjacentes à la cible à détecter actuelle et qui sont déterminées comme les résultats corrects, afin d'obtenir que la catégorie prédite correspondant à la cible à détecter actuelle corresponde au second coefficient de confiance du premier résultat de reconnaissance.

3. Procédé selon la revendication 1, dans lequel la détermination selon laquelle, conformément à des premiers coefficients de confiance des catégories de prédiction qui correspondent à d'autres cibles à détecter adjacentes à la cible à détecter actuelle et qui sont déterminées comme les résultats corrects, la catégorie prédite correspondant à la cible à détecter actuelle correspond à un second coefficient de confiance du premier résultat de reconnaissance comprend :
la réalisation d'une opération de moyenne pondérée conformément aux premiers coefficients de confiance des catégories de prédiction qui correspondent à d'autres cible à détecter adjacentes à la cible à détecter actuelle et qui sont déterminées comme les résultats corrects, et à des premiers coefficients de confiance des catégories de prédiction qui correspondent à d'autres cibles à détecter adjacentes à la cible à détecter actuelle et qui sont déterminées comme les résultats ambigus, et la détermination selon laquelle la catégorie prédite correspondant à la cible à détecter actuelle correspond au second coefficient de confiance du premier résultat de reconnaissance, une pondération du premier coefficient de confiance de chaque catégorie prédite déterminée comme le résultat correct étant supérieure à une pondération du premier coefficient de confiance de chaque catégorie prédite déterminée comme le résultat ambigu.

4. Procédé selon la revendication 1, comprenant en outre :
l'acquisition de premières données d'échantillon contenant la cible de référence et de données étiquetées correspondant aux premières données d'échantillon, à partir de données d'essais sur route ;
l'entraînement d'un premier détecteur pré-intégré conformément aux premières données d'échantillon et aux données étiquetées correspondant aux premières données d'échantillon, de manière à permettre au premier détecteur de délivrer correctement en sortie le premier résultat de reconnaissance pour la cible de référence ;
l'acquisition de secondes données d'échantillon contenant la cible à détecter et de données étiquetées correspondant aux secondes données d'échantillon à partir des données d'essais sur route ; et
l'entraînement d'un second détecteur pré-intégré conformément aux secondes données d'échantillon et aux données étiquetées correspondant aux secondes données d'échantillon, de manière à permettre au second détecteur de délivrer correctement en sortie le second résultat de reconnaissance pour la cible à détecter.

5. Procédé selon l'une quelconque des revendications 1 à 4, dans lequel la cible de référence est un panneau de guidage de voie, et la cible à détecter est une flèche de guidage routier.

6. Procédé selon l'une quelconque des revendications 1 à 4, dans lequel la comparaison du premier résultat de reconnaissance avec le second résultat de reconnaissance comprend :
si l'image à détecter ne contient pas simultanément la cible de référence et la cible à détecter, la comparaison du premier résultat de reconnaissance ou du second résultat de reconnaissance acquis en premier lieu avec un second résultat de reconnaissance ou un premier résultat de reconnaissance acquis ultérieurement, dans un intervalle de temps prédéterminé.

7. Appareil de détection de cible pour véhicules autonomes, comprenant :
un module d'acquisition, configuré pour acquérir, par un dispositif d'acquisition d'images agencé sur un véhicule cible, une image située devant le véhicule cible en temps réel, en tant qu'image à détecter ;
un premier module de détection, configuré pour appliquer en entrée l'image à détecter dans un premier détecteur pré-entraîné, de sorte que le premier détecteur délivre en sortie un premier résultat de reconnaissance d'une cible de référence contenue dans l'image à détecter, le premier détecteur présentant des fonctions de détection et de reconnaissance de cible ;
un second module de détection, configuré pour appliquer en entrée l'image à détecter dans un second détecteur pré-entraîné, de sorte que le second détecteur délivre en sortie un second résultat de reconnaissance d'au moins une cible à détecter contenue dans l'image à détecter, chaque cible à détecter et la cible de référence présentant une relation de correspondance, le second détecteur présentant des fonctions de détection et de reconnaissance de cible ;
un module de comparaison, configuré pour comparer le premier résultat de reconnaissance avec le second résultat de reconnaissance ; et
un module de traitement, configuré pour corriger le second résultat de reconnaissance conformément à un résultat de comparaison afin d'obtenir un résultat de reconnaissance de cible,
dans lequel le second résultat de reconnaissance comprend une catégorie prédite correspondant à chaque cible à détecter et un premier coefficient de confiance, et le premier résultat de reconnaissance comprend une catégorie de référence correspondant à chaque cible à détecter ;
le module de traitement est configuré pour : si le premier résultat de reconnaissance est identique à la catégorie prédite correspondant à une cible à détecter actuelle, déterminer que la catégorie prédite correspondant à la cible à détecter actuelle est un résultat correct ;
**caractérisé en ce que**
si le premier résultat de reconnaissance est différent de la catégorie prédite correspondant à la cible à détecter actuelle, déterminer que la catégorie prédite correspondant à la cible à détecter actuelle est un résultat ambigu, et déterminer, conformément à des premiers coefficients de confiance des catégories de prédiction qui correspondent à d'autres cibles à détecter adjacentes à la cible à détecter actuelle et qui sont déterminées comme des résultats corrects, que la catégorie prédite correspondant à la cible à détecter actuelle correspond à un second coefficient de confiance du premier résultat de reconnaissance ; et
si le second coefficient de confiance atteint un seuil prédéterminé, corriger la catégorie prédite correspondant à la cible à détecter actuelle pour qu'elle corresponde à la catégorie de référence correspondante dans le premier résultat de reconnaissance.

8. Appareil selon la revendication 7, dans lequel le module de traitement est configuré pour :
moyenner les premiers coefficients de confiance des catégories de prédiction qui correspondent à d'autres cibles à détecter adjacentes à la cible à détecter actuelle et qui sont déterminées comme les résultats corrects, afin d'obtenir que la catégorie prédite correspondant à la cible à détecter actuelle corresponde au second coefficient de confiance du premier résultat de reconnaissance.

9. Appareil selon la revendication 7, dans lequel le module de traitement est configuré pour :
réaliser une opération de moyenne pondérée conformément aux premiers coefficients de confiance des catégories de prédiction qui correspondent à d'autres cible à détecter adjacentes à la cible à détecter actuelle et qui sont déterminées comme les résultats corrects, et à des premiers coefficients de confiance des catégories de prédiction qui correspondent à d'autres cibles à détecter adjacentes à la cible à détecter actuelle et qui sont déterminées comme les résultats ambigus, et déterminer que la catégorie prédite correspondant à la cible à détecter actuelle correspond au second coefficient de confiance du premier résultat de reconnaissance, une pondération du premier coefficient de confiance de chaque catégorie prédite déterminée comme le résultat correct étant supérieure à une pondération du premier coefficient de confiance de chaque catégorie prédite déterminée comme le résultat ambigu.

10. Appareil selon la revendication 7, dans lequel le module de traitement est configuré pour :
acquérir des premières données d'échantillon contenant la cible de référence et des données étiquetées correspondant aux premières données d'échantillon, à partir de données d'essais sur route ;
entraîner un premier détecteur pré-intégré conformément aux premières données d'échantillon et aux données étiquetées correspondant aux premières données d'échantillon, de manière à permettre au premier détecteur de délivrer correctement en sortie le premier résultat de reconnaissance pour la cible de référence ;
acquérir des secondes données d'échantillon contenant la cible à détecter et des données étiquetées correspondant aux secondes données d'échantillon à partir des données d'essais sur route ; et
entraîner un second détecteur pré-intégré conformément aux secondes données d'échantillon et aux données étiquetées correspondant aux secondes données d'échantillon, de manière à permettre au second détecteur de délivrer correctement en sortie le second résultat de reconnaissance pour la cible à détecter.

11. Appareil selon l'une quelconque des revendications 7 à 10, dans lequel la cible de référence est un panneau de guidage de voie, et la cible à détecter est une flèche de guidage routier.

12. Appareil selon l'une quelconque des revendications 7 à 10, dans lequel le module de comparaison est configuré pour :
si l'image à détecter ne contient pas simultanément la cible de référence et la cible à détecter, comparer le premier résultat de reconnaissance ou le second résultat de reconnaissance acquis en premier lieu avec un second résultat de reconnaissance ou un premier résultat de reconnaissance acquis ultérieurement, dans un intervalle de temps prédéterminé.

13. Dispositif électronique, comprenant une mémoire, un processeur et un programme informatique stocké dans la mémoire et pouvant être exécuté sur le processeur, dans lequel le processeur exécute le programme pour mettre en œuvre le procédé de détection de cible lors de l'exécution de véhicules selon l'une quelconque des revendications 1 à 6.

14. Support de stockage lisible par ordinateur stockant un programme informatique, dans lequel le programme, lorsqu'il est exécuté par un processeur, met en œuvre le procédé de détection de cible lors de l'exécution de véhicules selon l'une quelconque des revendications 1 à 6.
